Europäisches Patentamt

European Patent Office

Office européen des brevets

(11) Publication number: **0 046 062**

**B1**

(12) **EUROPEAN PATENT SPECIFICATION**

(45) Date of publication of patent specification: **09.10.85**

(21) Application number: **81303594.6**

(22) Date of filing: **06.08.81**

(51) Int. Cl.⁴: **F 16 D 55/14**

(54) Improvements in self-energising disc brakes.

(30) Priority: **09.08.80 GB 8026033**

(43) Date of publication of application:
**17.02.82 Bulletin 82/07**

(45) Publication of the grant of the patent:
**09.10.85 Bulletin 85/41**

(84) Designated Contracting States:
**DE FR IT**

(56) References cited:
**GB-A-1 211 476**
**GB-A-1 242 994**
**GB-A-2 017 845**

(73) Proprietor: **LUCAS INDUSTRIES public limited company**
**Great King Street**
**Birmingham, B19 2XF West Midlands (GB)**

(72) Inventor: **Thoennes, Theodor**
**Ulmenerstrasse 2**
**D-5569 Demerath (DE)**

(74) Representative: **Spall, Christopher John et al**
**BARKER, BRETTELL & DUNCAN 138 Hagley Road**
**Edgbaston Birmingham B16 9PW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Description

This invention relates to self-energising disc brakes of the kind comprising a housing in which rotatable friction discs provided with friction linings are disposed, the discs being brought into engagement with spaced opposed radial surfaces in the housing by pressure plates located between the friction discs and centred by stationary pilot lugs, application of the brake being initiated by angular movement of the pressure plates effected by operation of a brake-applying mechanism connected to radially projecting lugs on the plates, and through which a brake-applying force is applied to the plates.

Self-energising brakes of the kind set forth are commonly used in tractors and like vehicles and have balls or rollers located in co-operating oppositely inclined recesses in the adjacent faces of the pressure plates such that on operation of the brake-applying mechanism to move the pressure plates angularly in opposite directions, the engagement of the balls or rollers in the recesses causes the pressure plates to move apart and into engagement with the friction discs which are urged into engagement with the radial surfaces. The pressure plates are carried round with the friction discs until one is arrested by the engagement of a lug on the plate with a drag-taking stop abutment in the housing and the continued angular movement of the other pressure plate provides a servo action. It is with the brake-applying mechanism that the invention is principally concerned.

In known brakes according to the precharacterizing portion of claim 1, such as that shown in GB—A—1 242 994, the brake-applying mechanism comprises links which are pivotally connected to the radially projecting lugs on the plates and through which a brake-applying force is applied to the plates when a pull-rod which is connected to the inner ends of the links is moved in a radial direction. Such constructions, although cheap and convenient to provide, suffer from the disadvantage that the mechanical advantage decreases with wear of the friction linings. Other brake-applying mechanisms in which the mechanical advantage is substantially constant are known, but these require the brake-applying force to be applied in a direction other than radial, which may be inconvenient when the brake is installed in a tractor, or depend upon the provision of a shaft mounted in a sealed bearing, which is often uneconomical to provide.

The present invention has two aspects within its general inventive concept, and it is convenient to express these aspects separately.

According to the first aspect of our invention in a self-energising disc brake of the kind set forth two fixed pivots are provided in the housing, with a lever assembly carried from the fixed pivots both for pivotal movement with respect to each fixed pivot as an axis and bodily angular movement with respect to each fixed pivot substantially about an arc centred on the axis of the brake; the lever assembly having a first pivotal connection to the pull-rod at a point on the lever assembly spaced from the fixed pivots, a second pivotal connection to one link and a third pivotal connection to the other link, the second and third pivotal connections being at points on the lever assembly spaced from the first pivotal connection and the fixed pivots.

According to the second aspect of our invention in a self-energising disc brake of the kind set forth a single fixed pivot is provided in the housing, with a lever assembly carried from the fixed pivot both for pivotal movement with respect to the fixed pivot as an axis and bodily angular movement with respect to the fixed pivot substantially about an arc centred on the axis of the brake, the lever assembly having a first pivotal connection to the pull-rod at a point on the lever assembly spaced from the fixed pivot, a second pivotal connection to one link and a third pivotal connection to the other link, the second and third pivotal connections being at points on the lever assembly spaced from the first pivotal connection and the fixed pivot.

When the brake is applied the lever assembly describes pivotal movements about the or each fixed pivot as an axis and the lever assembly can also move angularly with respect to the or each fixed pivot about the arc to compensate both for differential angular movement between the pressure plates during the application of the brake and any wear of the friction linings. Thus any variations in the mechanical advantage caused by wear of the linings are accommodated by displacement of the lever assembly with respect to the or each fixed pivot. The invention therefore provides a cheap and convenient construction which is operated by movement of the pull-rod in a radial direction, but which is also able to compensate for changes in mechanical advantage.

Preferably the second pivotal connection connects the free end of the one link to a point on the lever assembly disposed between the first pivotal connection and the or the one fixed pivot, and the third pivotal connection connects the free end of the other link to a point on the lever assembly disposed between the first pivotal connection and the or the other fixed pivot, the second and third pivotal connections being spaced in opposite directions with respect to the first pivotal connection.

Where two fixed pivots are provided the lever assembly may comprise two separate oppositely directed bell-cranks, each carried from one of the separately fixed pivots in the housing with the pull-rod acting through the first pivotal connection which is common to both bell-cranks. Where the single fixed pivot is provided the lever assembly may comprise a single bell-crank member carried from the single fixed pivot.

The or each fixed pivot may comprise a circular pin which is received in an elongate slot in the lever assembly, or the lever assembly may be carried from the fixed pivot or pivots by an additional link or links pivotally connected to the lever assembly.

A known construction and two embodiments in accordance with our invention are illustrated in the accompanying drawings in which:—

*Figure 1* is a plan of a known brake-applying mechanism for a brake of the kind set forth;

*Figure 2* is a plan of a new brake-applying mechanism for a brake of the kind set forth; and

*Figure 3* is a plan similar to Figure 2 of another brake-applying mechanism;

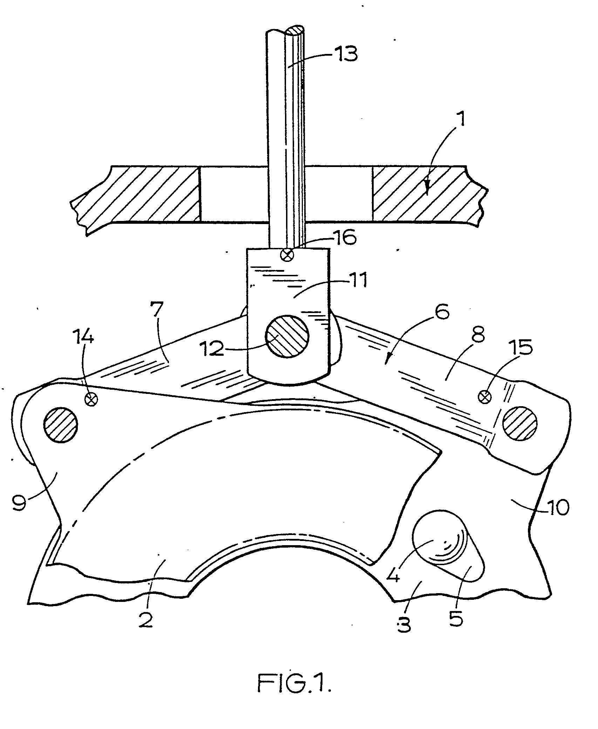

In the known construction illustrated in Figure 1 of the drawings a self-energising brake shown in outline comprises a housing 1 through which a rotatable shaft (not shown) extends axially. A pair of axially spaced friction discs provided on opposite sides with lining of friction material are slidably splined on the shaft. The discs are adapted to be brought into engagement with axially spaced radial braking surfaces at opposite ends of the housing 1 by a pair of annular pressure plates 2 and 3 which are located between the discs and are centred by three stationary pilots on the housing 1. Balls or rollers 4 are located in co-operating oppositely inclined recesses 5 in adjacent faces of the pressure plates 2 and 3.

The application of the brake is initiated by moving the pressure plates 2 and 3 angularly in opposite directions which causes the balls 4 to tend to ride up ramps formed by the walls of the recesses and the pressure plates 2 and 3 then move apart into engagement with the friction discs to urge them into engagement with the radial surfaces on the housing 1.

When the discs are rotating in one direction, the plates 2 and 3 are carried round with the discs until one plate is arrested by the engagement of a radial lug on that plate with an adjacent face on a stop abutment. Continued angular movement of the other plate provides a servo-action to increase the braking torque.

When the shaft is rotating in the opposite direction and the brake is applied, the sequence described above is repeated except that the angular movement of the other plate is arrested.

The angular movement of the plates 2 and 3 to apply the brake is initiated by a brake-applying mechanism 6. The mechanism 6 comprises a pair of toggle links 7 and 8 which are symmetrically arranged. The link 7 is pivotally connected at its innermost pivotal point to a radial lug 9 on the pressure plate, and the link 8 is pivotally connected at its innermost pivotal point to a radial lug 10 on the pressure plate 3. The free ends of both links 7 and 8 are pivotally connected between the limbs of a bifurcated fitting 11 by means of a pivot pin 12 and the fitting is coupled to the inner end of a radially movable pull-rod 13.

In the application of the brake, a pull applied to the pull-rod 13 in a radial direction is transmitted to both toggle links 7 and 8 to urge the lugs 9 and 10 towards each other in a circumferential direction to effect application of the brake with a self-energising action as described above.

Figure 1 of the drawings shows the relative positions of the components of the brake-applying mechanism 6 when the friction linings are new. The dots 14, 15 and 16 show the positions to which the pivotal connections between the links 7 and 8 and the lugs 9 and 10, and the pivot pin 12, move when the linings are worn, for a given brake-applying force applied to the lugs 9, 10. In the "worn-linings" position shown, the force applied to the pull-rod 13 is 1.71 times greater than that which is applied to the pull-rod 13 when the linings are new to produce the said given brake-applying force applied to the lugs 9, 10. Thus the mechanical advantage decreases with wear of the friction linings.

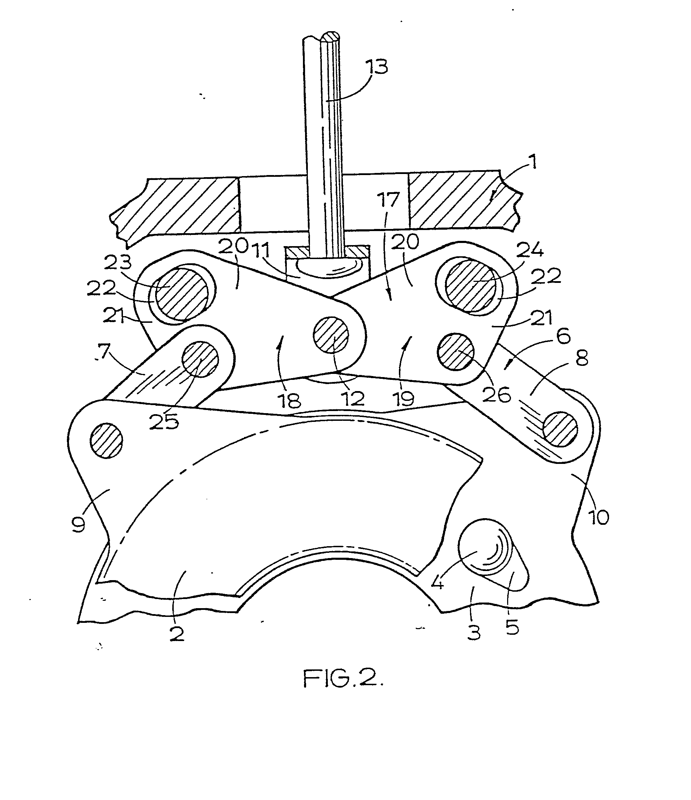

In the brake-applying mechanism illustrated in Figure 2 of the drawings the toggle links 7 and 8 are coupled to the pull-rod 13 through a lever assembly 17 disposed within the housing 1 radially of the plates 2 and 3. The lever assembly 17 comprises two bell-cranks 18 and 19 which are oppositely arranged symmetrically each bell-crank 18, 19 having two arms 20, 21. At the intersection of the arms 20, 21 the bell-cranks 18, 19 are provided with elongate slots 22, each of which receives one of a pair of circumferentially spaced circular pins 23, 24 which are fixed on the housing. The free ends of respective corresponding arms 20 are both coupled to the pivot pin 12, while at the ends of the other, shorter arms 21 each bell-crank 18, 19 is connected by means of a pivotal connection 25, 26 to the free end of a respective one of the toggle links 7, 8. When the linings are new, the main axis of each slot 22 is substantially tangential to a circle of which the centre coincides with the axis of the shaft.

When the brake is applied by a pull applied to the pull-rod 13 as described above, the bell-cranks 18, 19 move angularly about the pins 23, 24 as axes to transmit the brake-applying force to the toggle links 7 and 8 and, in turn, to the plates 2 and 3 through the lugs 9 and 10. Also each bell-crank 18, 19 can move bodily and angularly relative to its respective pin 23, 24 as permitted by the slot 22, circumferentially through the arc of the circle to compensate for differential angular movement between the pressure plates 2, 3 during application of the brake, and any wear of the friction linings. Thus any variations in the mechanical advantage due to wear of the linings are accommodated by displacement of the bell-cranks 18, 19 with respect to the pins 23, 24.

The relative lengths of the arms 20, 21 of the bell-cranks 18, 19 are chosen to provide any desired mechanical advantage. The bell-cranks 18, 19 allow the non-tangential components of the forces on the cranks 17, 18 to be transmitted to the housing 1 through the pins 23, 24 and the outermost edges of the slots 22.

The construction and operation of the brake and the mechanism of Figure 2 is otherwise the same as that of Figure 1 and corresponding reference numerals have been applied to corresponding parts.

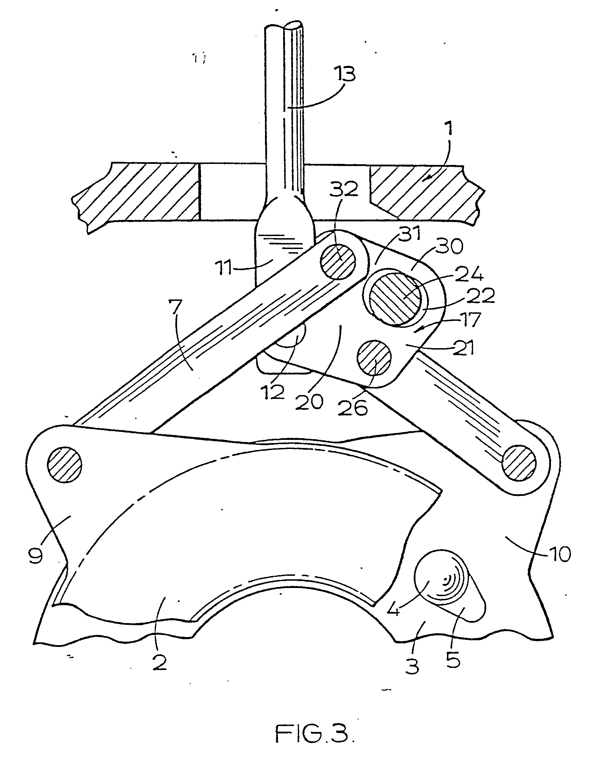

In the brake-applying mechanism illustrated in Figure 3 the two bell-cranks 18 and 19 are replaced by a single bellcrank 30 equivalent to a double bell-crank or to two bell-cranks which are oppositely directed. As illustrated the bell-crank 30 has generally the outline of a parallelogram and is equivalent to the bell-crank 19, having a longer arm 20 extending between the pins 12 and 24, and a shorter arm 21 extending between the pin 24 and the connection 26 to the toggle link 8, but is modified to include a third arm 31 extending from the pin 24, the toggle link 7 being connected by a pivotal connection 32 to the free end of this arm 31.

The construction and operation of the mechanism of Figure 3 is otherwise the same as that of Figure 2 and corresponding reference numerals have been applied to corresponding parts.

In a modification of the mechanisms of Figure 2, the pins 23 and 24 and the slots 22 in which they are received are omitted and each bell-crank 18, 19, is pivotally carried from an additional link of which the free end is pivotally connected to a pivotal connection with the housing 1. The additional link is disposed substantially at right angles to the main axis of an illustrated slot 22, and a degree of lost-motion is provided between the additional link and each bell-crank 18, 19, but only to permit each bell-crank 18, 19 to move relative to the additional link in the same manner as is permitted by the slots 22 and a respective pin 23, 24 to compensate for differential angular movement between the pressure plates 2, 3 during application of the brake, and any wear of the friction linings, as described above.

In a similar modification of the mechanism of Figure 3, the pin 24 and the slot 22 in which it is received are omitted, and the lever 30 is carried from an additional link whose free end is pivotally connected to the housing 1. The additional link is disposed substantially at right-angles to the main axis of the illustrated slot 22, and a degree of lost-motion is provided between the additional link and the lever 30 to permit the lever 30 to move relative to the additional link in the same manner permitted by the slot 22 and pin 24, to compensate for differential angular movement of the pressure plates 2, 3 during application of the brake, and any wear of the friction linings.

**Claims**

1. A self-energising disc brake comprising a housing (1) in which are disposed rotatable friction discs provided with friction linings, the discs being brought into engagement with spaced opposed radial surfaces in the housing by pressure plates (2, 3) located between the friction discs and centred by stationary pilot lugs, application of the brake being initiated by angular movement of the pressure plates (2, 3) effected by operation of a brake-applying mechanism (6) connected to radially projecting lugs (9, 10) on the plates (2, 3) and through which a brake-applying force is applied to the plates (2, 3), the brake-applying mechanism (6) comprising a pair of links (7, 8) of which one (7) is pivotally connected at one end to the lug (9) on one of the plates (2), and the other (8) is pivotally connected at one end to the lug (10) on the other of the plates (3), and a pull-rod (13) movable in a radial direction to apply the brake, characterised in that two fixed pivots (23, 24) are provided in the housing (1), with a lever assembly (17) carried from the fixed pivots (23, 24) both for pivotal movement with respect to each fixed pivot (23, 24) as an axis and bodily angular movement with respect to fixed pivot (23, 24) substantially about an arc centred on the axis of the brake, the lever assembly (17) having a first pivotal connection (12) to the pull-rod at a point on the lever assembly spaced from the fixed pivots (23, 24), a second pivotal connection (25) to one link (7) and a third pivotal connection (26) to the other link (8), the second and third pivotal connections (25, 26) being at points on the lever assembly (17) spaced from the first pivotal connection (12) and the fixed pivots (23, 24).

2. A self-energising disc brake according to Claim 1, characterised in that the second pivotal connection (25) connects the free end of the one link (7) to a point on the lever assembly (17) disposed between the first pivotal connection (12) and the one fixed pivot (23), and the third pivotal connection (26) connects the free end of the other link (8) to a point on the lever assembly (17) disposed between the first pivotal connection (12) and the other fixed pivot (24), the second and third pivotal connections being (25, 26) spaced in opposite directions with respect to the first pivotal connection (12).

3. A self-energising disc brake according to Claim 1 or Claim 2, characterised in that the lever assembly (17) comprises two separate oppositely directed bell-cranks (18, 19), each carried from one of the separately fixed pivots (23, 24) in the housing, with the pull-rod (13) acting through the first pivotal connection (12) which is common to both bell-cranks (18, 19).

4. A self-energising disc brake comprising a housing (1) in which are disposed rotatable friction discs provided with friction linings, the discs being brought into engagement with spaced opposed radial surfaces in the housing by pressure plates (2, 3) located between the friction discs and centred by stationary pilot lugs, application of the brake being initiated by angular movement of the pressure plates (2, 3) effected by operation of a brake-applying mechanism (6) connected to radially projecting lugs (9, 10) on the plates (2, 3) and through which a brake-applying force is applied to the plates (2, 3), the brake-applying mechanism (6) comprising a pair of links (7, 8) of which one (7) is pivotally connected at one end to the lug (9) on one of the plates (2), and the other (8) is pivotally connected at one end to the lug (10) on the other of the plates (3), and a pull-rod (13) movable in a radial direction to apply the brake, characterised in that a single fixed pivot (24) is provided in the housing (1), with a lever assembly (17) carried from the fixed pivot (24) both for pivotal movement with respect to the fixed pivot (24) as an axis and bodily angular movement with respect to the fixed pivot (24) substantially about an arc centred on the axis of the brake, the lever assembly (17) having a first pivotal connection (12) to the pull-rod at a point on the lever assembly spaced from the fixed pivot (24), a second pivotal connection (32) to one link (7) and a third pivotal connection (26) to the other link (8), the second and third pivotal connections (32, 26) being at points on the lever assembly (17) spaced from the first pivotal connection (12) and the fixed pivot (24).

5. A self-energising disc brake according to Claim 4, characterised in that the second pivotal connection (32) connects the free end of the one link (7) to a point on the lever assembly (17) disposed between the first pivotal connection (12) and the single fixed pivot (24), and the third pivotal connection (26) connects the free end of the other link (8) to a point on the lever assembly (17) disposed between the first pivotal connection (12) and the single fixed pivot (24), the second and third pivotal connections (32, 26) being spaced in opposite directions with respect to the first pivotal connection (12).

6. A self-energising disc brake according to Claim 4 or Claim 5, characterised in that the lever assembly (17) comprises a single bell-crank (30) carried from the single fixed pivot (24).

7. A self-energising disc brake according to any preceding claim, characterised in that the or each fixed pivot comprises a circular pin (23, 24) which is received in an elongate slot (22) in the lever assembly (17).

8. A self-energising disc brake according to any preceding claim, characterised in that the lever assembly (17) is carried from the fixed pivot or pivots (23, 24) by an additional link or links pivotally connected to the lever assembly (17).

**Revendications**

1. Frein à disques à auto-serrage, comprenant un boîtier (1) dans lequel des disques de friction, capables de tourner et pourvus de garnitures de friction, sont disposés, les disques étant amenés à entrer en contact avec des surfaces radiales opposées et écartées, appartenant au boîtier par des plaques de pression (2, 3) placées entre les disques de friction et centrées par des oreilles de guidage stationnaires, l'application du frein étant déclenchée par le déplacement angulaire des plaques de pression (2, 3) effectué par l'actionnement d'un mécanisme (6) d'application du frein qui est relié à des oreilles (9, 10) faisant saillie radialement sur les plaques (2, 3) et par l'intermédiaire desquelles une force d'application du frein est appliquée sur les plaques (2, 3), le mécanisme d'application du frein (6) comprenant une paire de liaisons (7, 8) dont l'une (7) est reliée avec pivotement à une extrémité à l'oreille (9) d'une des plaques (2) et dont l'autre (8) est reliée avec pivotement à une extrémité à l'oreille (10) sur l'autre des plaques (3), et une tige de traction (13) pouvant se déplacer dans un sens radial pour appliquer le frein, caractérisé en ce que deux pivots fixes (23, 24) sont prévus dans le boîtier (1), avec un ensemble de leviers (17) porté par les pivots fixes (23, 24) à la fois pour le mouvement de pivotement par rapport à chaque pivot fixe (23, 24) servant d'axe et pour le mouvement angulaire d'ensemble par rapport au pivot fixe (23, 24) sensiblement le long d'un arc centré sur l'axe du frein, l'ensemble de leviers (17) comportant une première attache pivotante (12) sur la tige de traction en un point de l'ensemble de leviers espacé par rapport aux pivots fixes (23, 24), une deuxième attache pivotante (25) avec une liaison (7) et une troisième attache pivotante (26) avec l'autre liaison (8), la deuxième attache pivotante et la troisième attache pivotante (25, 26) se trouvant en des points de l'ensemble de leviers (17) espacés par rapport à la première attache à pivotement (12) et aux pivots fixes (23, 24).

2. Frein à disques à auto-serrage selon la revendication 1, caractérisé en ce que la deuxième attache pivotante (25) relie l'extrémité libre d'une dite liaison (7) à un point de l'ensemble de leviers (17) disposé entre la première attache pivotante (12) et ledit pivot fixe (23), et la troisième attache pivotante (26) relie l'extrémité libre de l'autre liaison (8) à un point de l'ensemble de leviers (17) disposé entres la première attache pivotante (12) et l'autre pivot fixe (24), les deuxième et troisième attaches pivotantes (25, 26) étant écartées dans des directions opposées par rapport à la première attache pivotante (12).

3. Frein à disques à auto-serrage selon la revendication 1 ou 2, caractérisé en ce que l'ensemble de leviers (17) comprend deux renvois à sonnette (18, 19) séparés et dirigés en sens opposé chacun étant supporté par l'un des pivots (23, 24) fixés séparément dans le boîtier, la tige de traction (13) agissant par l'intermédiaire de la première attache pivotante (12) qui est commune aux deux renvois à sonnette (18, 19).

4. Frein à disques à auto-serrage comprenant un boîtier (1), dans lequel des disques de friction capables de tourner et pourvus de garnitures de friction sont disposés, les disques étant amenés à entrer en contact avec des surfaces radiales espacées et opposées du boîtier par des plaques de pression (2, 3) placées entre les disques de friction et centrées par des oreilles de guidage stationnaires, l'application du frein étant déclenchée par le déplacement angulaire des plaques de pression (2, 3) effectué par l'actionnement d'un mécanisme (6) d'application du frein relié à des oreilles (9, 10) faisant saillie radialement sur les plaques (2, 3) et par l'intermédiaire desquelles une force d'application du frein est appliquée aux plaques (2, 3), le mécanisme (6) d'application du frein comprenant une paire de liaisons (7, 8) dont l'une (7) est reliée avec pivotement en une extrémité à l'oreille (9) sur l'une des plaques (2) et dont l'autre (8) est reliée avec pivotement à l'oreille (10) sur l'autre des plaques (3), et une tige de traction (13) pouvant se déplacer dans un sens radial pour appliquer le frein, caractérisé en ce qu'un seul pivot fixe (24) est prévu dans le boîtier (1), avec un ensemble de leviers (17) porté par le pivot fixe (24), à la fois pour un mouvement de pivotement par rapport au pivot fixe (24) servant d'axe et un mouvement angulaire d'ensemble par rapport au pivot fixe (24), sensiblement le long d'un arc centré sur l'axe du frein, l'ensemble de leviers (17) comportant une première attache pivotante (12) avec la tige de traction en un point de l'ensemble de leviers espacé par rapport au pivot fixe (24), une deuxième attache pivotante (32) avec une liaison (7) et une troisième attache pivotante (26) avec l'autre liaison (8), les deuxième et troisième attaches pivotantes (32, 26) se trouvant en des points de l'ensemble de leviers (17) espacés par rapport à la première attache à pivotement (12) et au pivot fixe (24).

5. Frein à disques à auto-serrage selon la revendication 4, caractérisé en ce que la deuxième attache pivotante (32) relie l'extrémité libre de ladite liaison (7) à un point de l'ensemble de leviers (17) disposé entre la première attache pivotante (12) et le pivot fixe unique (24), et en ce que la troisième attache pivotante (26) relie l'extrémité libre de l'autre liaison (8) à un point de l'ensemble de leviers (17) disposé entre la première attache pivotante (12) et le pivot fixe unique (24), les deuxième et troisième attaches pivotantes étant écartées en sens opposé par rapport à la première attache pivotante.

6. Frein à disques à auto-serrage selon la revendication 4 ou 5, caractérisé en ce que l'ensemble de leviers (17) comprend un seul renvoi à sonnette (30) porté par le pivot fixe unique (24).

7. Frein à disques à auto-serrage selon l'une quelconque des revendications précédentes, caractérisé en ce que le pivot fixe ou chaque pivot fixe comprend une broche circulaire (23, 24) se logeant dans une fente (22) de forme allongée dans l'ensemble de leviers (17).

8. Frein à disques à auto-serrage selon l'une quelconque des revendications précédentes, caractérisé en ce que l'ensemble de leviers (17) est supporté par le pivot fixe ou les pivots fixes (23, 24) grâce à une ou plusieurs liaisons supplémentaires reliées avec pivotement à l'ensemble de leviers (17).

**Patentansprüche**

1. Scheibenbremse mit Selbstverstärkung, mit einem Gehäuse (1), in welchem sich mit Reibbelägen versehene, drehbare Reibungsscheiben befinden, die mit im Gehäuse befindlichen, im Abstand einander gegenüberliegenden radialen Flächen mittels zwischen den Reibungsscheiben angeordneten und von feststehenden Führungsanschlägen zentrierten Druckplatten (2, 3) in Eingriff kommen, wobei die Betätigung der Bremse durch Winkelbewegung der Druckplatten (2, 3) aufgrund Betätigung eines Bremsmechanismus (6) eingeleitet wird, der an radial vorstehende Ansätze (9, 10) der Platten (2, 3) angeschlossen ist und durch den eine Bremskraft auf die Platten (2, 3) ausgeübt wird, wobei der Bremsmechanismus (6) zwei Verbindungsstücke (7, 8), von denen eines (7) mit einem Ende an den Ansatz (9) einer der Platten (2) und das andere (8) mit einem Ende an den Ansatz (10) der anderen der Platten (3) angelenkt ist, und eine zum Bremsen in radialer Richtung bewegbare Zugstange (13) aufweist, dadurch gekennzeichnet, daß im Gehäuse (1) zwei feststehende Stifte (23, 24) vorgesehen sind, die ein Hebelsystem (17) sowohl um jeden feststehenden Stift (23, 24) als Achse schwenkbar als auch gegenüber dem feststehenden Stift (23, 24) im wesentlichen über einen Bogen, dessen Mittelpunkt auf der Achse der Bremse liegt, als Ganzes winkelmäßig bewegbar tragen, das an einer von den feststehenden Stiften (23, 24) entfernten Stelle des Hebelsystems eine erste Schwenkverbindung (12) zur Zugstange, eine zweite Schwenkverbindung (25) zum einen Verbindungsstück (7) und eine dritte Schwenkverbindung (26) zum anderen Verbindungsstück (8) aufweist, wobei sich die zweite und die dritte Schwenkverbindung (25, 26) an von der ersten Schwenkverbindung (12) und den feststehenden Stiften (23, 24) entfernten Stellen des Hebelsystems (17) befinden.

2. Scheibenbremse mit Selbstverstärkung nach Anspruch 1, dadurch gekennzeichnet, daß die zweite Schwenkverbindung (25) das freie Ende des Verbindungsstückes (7) mit einer Stelle des Hebelsystems (17), die sich zwischen der ersten Schwenkverbindung (12) und dem einen feststehenden Stift (23) befindet, und die dritte Schwenkverbindung (26) das freie Ende des anderen Verbindungsstückes (8) mit einer Stelle des Hebelsystems (17) verbindet, die sich zwischen der ersten Schwenkverbindung (12) und dem anderen feststehenden Stift (24) befindet, wobei die zweite und dritte Schwenkverbindung (23, 26) in entgegengesetzten Richtungen von der ersten Schwenkverbindung (12) entfernt sind.

3. Scheibenbremse mit Selbstverstärkung nach Anspruch 1 oder 2, dadurch gekennzeichnet, daß das Hebelsystem (17) zwei getrennte, entgegengesetzt gerichtete Kurbeln (18, 19) aufweist, die jeweils von einem der getrennten, feststehenden Stifte (23, 24) in dem Gehäuse (1) getragen sind, wobei die Zugstange (13) über die erste Schwenkverbindung (12), welche den beiden Kurbeln (18, 19) gemeinsam ist, wirkt.

4. Scheibenbremse mit Selbstverstärkung, mit einem Gehäuse (1), in welchem sich mit Reibbelägen versehene, drehbare Reibungsscheiben befinden, die mit im Gehäuse befindlichen, im Abstand einander gegenüberliegenden radialen Flächen mittels zwischen den Reibungsscheiben angeordneten und von feststehenden Führungsanschlägen zentrierten Druckplatten (2, 3) in Eingriff kommen, wobei die Betätigung der Bremse durch Winkelbewegung der Druckplatten (2, 3) aufgrund Betätigung eines Bremsmechanismus (6) eingeleitet wird, der an radial vorstehende Ansätze (9, 10) der Platten (2, 3) angeschlossen ist und durch den eine Bremskraft auf die Platten (2, 3) ausgeübt wird, wobei der Bremsmechanismus (6) zwei Verbindungsstücke (7, 8), von denen eines (7) mit einem Ende an den Ansatz (9) einer der Platten (2) und das andere (8) mit einem Ende an den Ansatz (10) der anderen der Platten (3) angelenkt ist, und eine zum Bremsen in radialer Richtung bewegbare Zugstange (13) aufweist, dadurch gekennzeichnet, daß im Gehäuse (1) ein einzelner feststehender Stift (24) vorgesehen ist, der ein Hebelsystem (17) sowohl um den feststehenden Stift (24) als Achse schwenkbar als auch gegenüber dem feststehenden Stift (24) im wesentlichen über einen Bogen, dessen Mittelpunkt auf der Achse der Bremse liegt, als Ganzes winkelmäßig bewegbar trägt, das an einer von dem feststehenden Stift (24) entfernten Stelle des Hebelsystems eine erste Schwenkverbindung (12) zur Zugstange, eine zweite Schwenkverbindung (22) zum einen Verbindungsstück (7) und eine dritte Schwenkverbindung (26) zum anderen Verbindungsstück (8) aufweist, wobei sich die zweite und die dritte Schwenkverbindungen (32, 26) an von der ersten Schwenkverbindung (12) und dem feststehenden Stift (24) entfernten Stellen des Hebelsystems (17) befinden.

5. Scheibenbremse mit Selbstverstärkung nach Anspruch 4, dadurch gekennziechnet, daß die zweite Schwenkverbindung (32) das freie Ende des Verbindungsstückes (7) mit einer Stelle des Hebelsystems (17), die sich zwischen der ersten Schwenkverbindung (12) und dem einzelnen feststehenden Stift (24) befindet, und die dritte Schwenkverbindung (26) das freie Ende des anderen Verbindungsstückes (8) mit einer Stelle des Hebelsystems (17) verbindet, die sich zwischen der ersten Schwenkverbindung (12) und dem einzelnen feststehenden Stift (24) befindet, wobei die zweite und dritte Schwenkverbindungen (32, 26) in entgegengesetzten Richtungen von der ersten Schwenkverbindung (12) entfernt sind.

6. Scheibenbremse mit Selbstverstärkung nach Anspruch 4 oder 5, dadurch gekennzeichnet, daß das Hebelsystem (17) eine einzelne Kurbel (30) aufweist, die von einem einzelnen feststehenden Stift (24) getragen ist.

7. Scheibenbremse mit Selbstverstärkung nach einem der vorhergehenden Ansprüche, dadurch gekennzeichnet, daß die oder jeder feststehende Stift einen runden Bolzen (23, 24) aufweist, welcher in ein Langloch (22) im Hebelsystem (17) eingreift.

8. Scheibenbremse mit Selbstverstärkung nach einem der vorhergehenden Ansprüche, dadurch gekennzeichnet, daß das Hebelsystem (17) von dem feststehenden Stift oder Stiften (23, 24) getragen ist und daß ein zusätzliches Verbindungsstück oder zusätzliche Verbindungsstücke an das Hebelsystem (17) angelenkt ist bzw. sind.

FIG.1.

FIG.2.

FIG.3.